# EUROPÄISCHE PATENTSCHRIFT

(11) **EP 3 833 891 B1**
(45) Veröffentlichungstag und Bekanntmachung des Hinweises auf die Patenterteilung: **10.08.2022**
(21) Anmeldenummer: 19755556.8
(22) Anmeldetag: 06.08.2019
(51) Int. Cl.: F16H 55/08, F16H 1/20

(54) **ZWEISTUFIGES ZAHNSTANGENGETRIEBE**
DOUBLE STAGE RACK AND PINION GEAR
ENGRENAGE À CRÉMAILLÈRE À DEUX ÉTAGES

(30) Priorität: 09.08.2018 DE 102018119418
(43) Veröffentlichungstag der Anmeldung: 16.06.2021
(73) Patentinhaber: MAUL KONSTRUKTIONEN GMBH, 52146 Würselen (DE)
(72) Erfinder: MAUL, Hans-Erich, 52146 Würselen (DE)
(74) Vertreter: Kohlmann, Kai
(86) Internationale Anmeldenummer: PCT/EP2019/071077
(87) Internationale Veröffentlichungsnummer: WO 2020/030620

(56) Entgegenhaltungen:
- EP-A2- 0 869 295
- WO-A1-2010/087033
- WO-A2-2009/134169
- DE-U1- 8 612 366
- DE-U1-202013 010 945
- ROTH R: "Parallel-Axis Gears with Pinion Tooth Numbers 1 to 5 for Machinery DrivesAB", KONSTRUKTION IM MASCHINEN-, APPARATE-, UND GERAETEBAU, SPRINGER, BERLIN, DE, Bd. 26, Nr. 11, 1. November 1974 (1974-11-01), Seiten 425-429, XP008083799, ISSN: 0023-3625
- ROTH K: "EVOLVENTENVERZAHNUNGEN MIT EXTREMEN EIGENSCHAFTEN", ANTRIEBSTECHNIK, VEREINIGTE FACHVERLAGE, MAINZ, DE, Bd. 35, Nr. 7, 1. Juli 1996 (1996-07-01), Seiten 43-48, XP000598602, ISSN: 0722-8546

## Beschreibung

Die Erfindung betrifft ein zweistufiges Zahnstangengetriebe, welches eine Rotationsbewegung einer Antriebswelle am Getriebeeingang in eine Linearbewegung einer Zahnstange am Getriebeausgang umwandelt.

Getriebe, welche mithilfe einer Zahnstange eine Rotationsbewegung in eine Linearbewegung umwandeln, werden als Zahnstangengetriebe bezeichnet. Eingangsseitig an einen Antrieb gekoppelte Zahnstangengetriebe werden für Positionier- und Bewegungsaufgaben beispielsweise in der Robotik, der Montage- und Automatisierungstechnik, der Fördertechnik, der Verfahrenstechnik und Prüftechnik verwendet. Die Geometrie einer Zahnstange in geradverzahnter oder schrägverzahnter Ausführung entspricht der abgewickelten Geometrie eines Stirnrades. Insofern stellt eine mit einem außenverzahnten Stirnrad im Eingriff stehende Zahnstange ein Sonderfall einer Stirnradverzahnung dar.

Ein besonderer Anwendungsfall der Zahnstangengetriebe stellen Fensterantriebe dar. In vielen Fällen ist es nicht oder nur schwer möglich, Fenster von Hand zu betätigen, zu Öffnen und zu Kippen. Neben der Steigerung des Bedienkomforts werden motorische Fensterantriebe zur automatischen Öffnung von Lüftungsfenstern, Kuppeln, Klappfenstern und Oberlichtern für die natürliche Gebäudelüftung eingesetzt; sie übernehmen die Betätigung der Fenster und das Bewegen des Fensterflügels. Diese motorischen Antriebe kommen auch für Rauch-Wärme-Abzugsanlagen zum Einsatz. Zahnstangenantriebe sind im Gegensatz zu Kettenmotoren sehr druck- und knickstabil, weisen jedoch ein hohes Eigengewicht auf und können aufgrund ihrer Abmessungen eine optische Beeinträchtigung darstellen.

Um die erforderlichen hohen Schubkräfte von teilweise mehr als 1200 N aufzubringen, weisen die aus dem Stand der Technik bekannten Zahnstangengetriebe für Fensterantriebe fünf bis acht Getriebestufen auf, um die Motordrehzahl zu untersetzen. Bei den einzelnen Getriebestufen handelt es sich um Stirnradgetriebestufen. Grundsätzlich haben mehrstufige Getriebe den Vorteil, das gewünschte Übersetzungsverhältnis auf mehrere kleinere Zahnräder aufzuteilen und so die Abmessungen des Getriebes insgesamt klein zu halten. Gleichwohl führt die große Anzahl der erforderlichen Getriebestufen zu Abmessungen des Fensterantriebs, die das optische Bild beeinträchtigen können.

Aus der DE 10 2014 226 265 A1 ist ein Zahnstangenantrieb für einen Betätigungszylinder einer Trommelbremse bekannt, wobei zum Antrieb der beidseitig verzahnten Zahnstange ein Elektromotor vorgesehen ist, dessen Motorwelle endseitig mit einem Wenigzahnritzel, beispielsweise mit einem 2-Zahnritzel, versehen ist. Die Drehbewegung der Motorwelle wird durch zwei Paare von Stirnzahnrädern auf die Zahnstange übertragen. Jedes Stirnradpaar besteht aus einem ersten Stirnzahnrad und einem zweiten Stirnzahnrad. Das Wenigzahnritzel greift in beide ersten Stirnzahnräder ein, während die beiden zweiten Stirnzahnräder jeweils in eine Verzahnung der beidseitig verzahnten Zahnstange eingreifen.

Die US 6,139 070 offenbart ein mehrstufiges Zahnstangengetriebe für eine Fensterverriegelung, wobei die erste Getriebestufe eine Schneckengetriebestufe und die zweite, dritte und vierte Getriebestufe Stirnradgetriebestufen sind, wobei die vierte Getriebestufe als treibendes Getriebeglied ein geradverzahntes Zahnrad und als getriebenes Getriebeglied eine geradverzahnte Zahnstange aufweist.

Roth, K: "Stirnradpaarungen mit 1 - bis 5 zähnigen Ritzeln im Maschinenbau", Springer, Berlin, Konstruktion 26 (1974), S. 425 -429, offenbart, dass das Gesamtübersetzungsverhältnis, welches sich aus dem Stufenübersetzungsverhältnis und der Anzahl der Stufen ergibt, die Änderung der Drehzahl bzw. des Drehmoments bestimmt. Bei einem großen Stufenübersetzungsverhältnis kann die Stufenzahl und damit auch die Anzahl der Lagerstellen verringert werden; bei gleichen Abmessungen des größeren Rades wird dann das gesamte Getriebe kleiner. Evolventenverzahnungen bis zur Zähnezahl z=1 werden erwähnt, die mit normverzahnten Gegenrädern kämmen.

Ausgehend von diesem Stand der Technik liegt der Erfindung die Aufgabe zugrunde, ein mehrstufiges Zahnstangengetriebe, insbesondere für die Verwendung in Fensterantrieben, vorzuschlagen, welches mit einer hohen Übersetzung große Schubkräfte bei im Vergleich zum Stand der Technik besonders kompakten Abmessungen übertragen kann.

Die Lösung basiert auf einem Zahnstangengetriebe mit zwei Getriebestufen, wobei eine der beiden Getriebestufen eine Stirnradgetriebestufe ist, die als treibendes Getriebeglied ein Zahnrad mit der Zähnezahl Z = 1 aufweist, welches unmittelbar in die Verzahnung der Zahnstange am Getriebeausgang eingreift. Im Einzelnen wird die Aufgabe durch ein Zahnstangengetriebe mit den Merkmalen des Anspruchs 1 gelöst.

Als Getriebestufe wird die Paarung zwischen einem treibenden Getriebeglied und einem getriebenen Getriebeglied bezeichnet, an der sich die Drehzahl und/oder das Drehmoment ändern.

Jeder Getriebestufe, die Räder als treibendes und getriebenes Getriebeglied umfasst, ist ein bestimmtes Übersetzungsverhältnis in das Langsame zugeordnet, d.h. die Drehzahl des getriebenen Rades ist geringer als die Drehzahl des treibenden Rades.

Soweit zwei Räder drehfest auf einer gemeinsamen Welle sitzen, ist deren Drehzahl identisch und es findet weder eine Änderung der Drehzahl noch eine Änderung des Drehmomentes statt. Bei diesen Rädern handelt es sich daher nicht um eine Getriebestufe.

Bei übereinstimmendem Gesamt-Übersetzungsverhältnis und übereinstimmender Schubkraft eines mehrstufigen Zahnstangengetriebes nach dem Stand der Technik und eines erfindungsgemäßen Zahnstangengetriebes bewirkt die erfindungsgemäß vorgesehene zweite Getriebestufe umfassend die Zahnstange und das Zahnrad mit der Zähnezahl Z=1, dass die Momente in der vorgeschalteten Getriebestufe bei zugleich höheren Drehzahlen geringer sind. Die vorgeschaltete Getriebestufe kann daher schwächer dimensioniert und infolgedessen kompakter ausgeführt werden. Zudem kann aufgrund des höheren Drehzahlniveaus der mit der ersten Getriebestufe verbundenem, auf die Antriebswelle arbeitendem Motor kompakter ausgeführt werden. Das Modul der zweiten Getriebestufe lässt sich problemlos derart dimensionieren, dass die hohen Momente von dem Zahnrad mit Z=1 auf die Zahnstange übertragen werden können.

Bei einer Zähnezahl Z = 1 lassen sich in der zweiten Getriebestufe besonders hohe Übersetzungsverhältnisse realisieren. Das hohe Übersetzungsverhältnis in der zweiten Getriebestufe erlaubt eine Reduktion der Anzahl der Getriebestufen auf zwei Getriebestufen mit weiteren Vorteilen für den Bauraum.

Weist die Zahnstange eine Geradverzahnung auf, verläuft die Rotationsachse des Zahnrades mit der maximalen Zähnezahl Z = 1 unter einem spitzen Winkel zur Längsachse der Zahnstange. Weist die Zahnstange eine Schrägverzahnung auf, verläuft die Rotationsachse des Zahnrades mit der maximalen Zähnezahl Z = 1 unter einem rechten Winkel zur Längsachse der Zahnstange. Abhängig von den Raumverhältnissen kann daher durch Wahl der Verzahnung die Lage des Zahnrades mit der Zähnezahl Z = 1 in der letzten Getriebestufe in Richtung des Getriebeausgangs angepasst werden.

Das Gesamt-Übersetzungsverhältnis i_{ges} des mehrstufigen Zahnstangengetriebes ist vorzugsweise i_{ges} ≥ 60:1 ist.

Aufgrund der hohen realisierbaren Übersetzungen und der Selbsthemmung ist die erste Getriebestufen eine Schneckengetriebestufe, die als treibendes Glied eine Schnecke und als getriebenes Glied ein Schneckenrad aufweist. Die Schnecke ist eine Sonderform eines schrägverzahnten Zahnrades. Der Winkel der Schrägverzahnung ist so groß, dass ein Zahn sich mehrfach schraubenförmig um die Radachse windet. Der Zahn wird in diesem Fall als Gang bezeichnet. Infolgedessen qualifiziert sich das Schneckengetriebe als Getriebestufe, die Räder als treibende und getriebene Getriebeglieder aufweist. Die Selbsthemmung unterbindet eine Rückdrehung des mit dem Getriebeeingang verbundenen Motors, insbesondere Elektromotors, aufgrund der am Getriebeausgang wirkenden Last, was insbesondere für Fensterantriebe nach Einstellung des gewünschten Öffnungswinkels von besonderer Bedeutung ist. Die Selbsthemmung tritt durch Gleitreibung zwischen Schnecke und Schneckenrad bei hoher Übersetzung und geringen Gangzahlen sowie einem Steigungswinkel der Schnecke γ kleiner 5° ein. Darüber hinaus trägt die Schnecke aufgrund ihrer Schrägverzahnung zur Geräuschminderung des mehrstufigen Zahnstangengetriebes bei. Ferner erlaubt eine Schneckengetriebestufe als erste Getriebestufe eine rechtwinklige Lage der Rotationsachse der eingangsseitigen Antriebswelle zu der Rotationsachse des Antriebsrades der nachfolgenden Getriebestufe.

Erfindungsgemäß ist das treibende Glied der Schneckengetriebestufe auf der Antriebswelle am Getriebeeingang angeordnet. Um eine Stoßdämpfung für den eingangsseitig mit der Antriebswelle zu koppelnden Antrieb zu bewirken, ist in einer vorteilhaften Ausgestaltung der Erfindung die Antriebswelle über eine elastische Kupplung mit dem Antrieb verbindbar.

Nachfolgend wird die Erfindung anhand der Zeichnungen näher erläutert. Es zeigen
- **Figuren 1 a - c**: perspektivische Darstellungen außenverzahnter Zahnräder mit einer Zähnezahl Z=1, Z=2 und Z=3,
- **Figur 2**: eine Aufsicht auf eine erste Ausführungsform eines zweistufigen Zahnstangengetriebes,
- **Figur 3**: eine Aufsicht auf eine zweite Ausführungsform eines zweistufigen Zahnstangengetriebes und
- **Figur 4**: eine perspektivische Ansicht des Zahnstangengetriebes nach Figur 3.

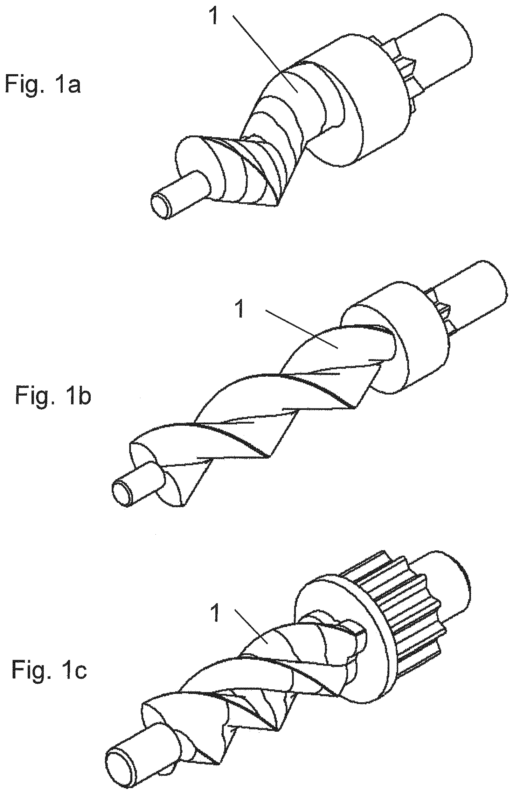

Figur 1a zeigt ein Zahnrad (1) mit der Zähnezahl Z=1. Figur 1b zeigt ein Zahnrad (1) mit der Zähnezahl Z=2. Figur 1c zeigt ein Zahnrad mit der Zähnezahl Z=3.

Die Geometrie einer Zahnstange (2) entspricht der abgewickelten Geometrie eines Zahnrades mit Außenverzahnung. Der Abstand von einem Zahn zum nächsten Zahn ist die Teilung der Zahnstange. Die Teilung dividiert durch n ergibt das Modul der Zahnstange. Die Zahnstange kann eine Gradverzahnung (2.2) oder Schrägverzahnung (2.1) aufweisen.

Das Zahnrad (1) mit der Zähnezahl Z=1 steht mit der Zahnstange (2) in Eingriff. Die zweite Getriebestufe wird nachfolgend auch als "Stirnradgetriebestufe Z=1 " bezeichnet.

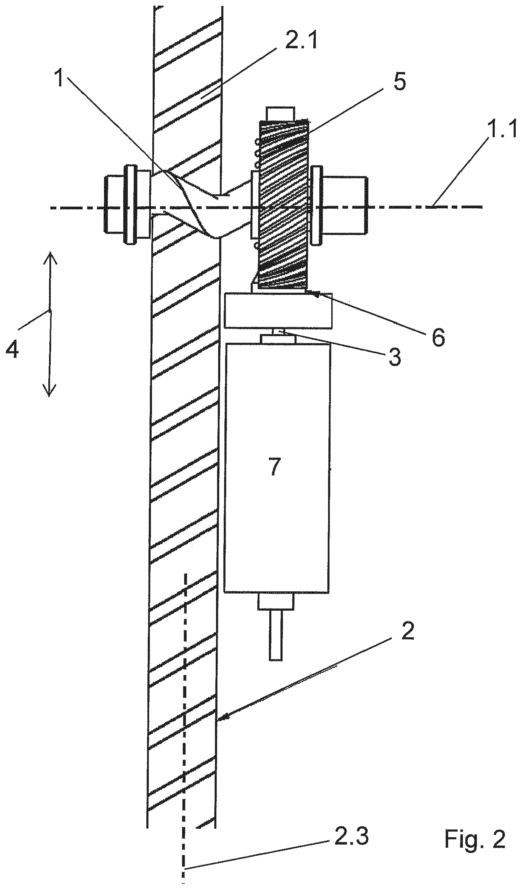

Figur 2 zeigt ein erstes Ausführungsbeispiel eines erfindungsgemäßen zweistufigen Zahnstangengetriebes, welches eine Rotationsbewegung einer Antriebswelle (3) am Getriebeeingang in eine Linearbewegung (4) der Zahnstange (2) am Getriebeausgang umwandelt. Die Zahnstange (2) weist im dargestellten Ausführungsbeispiel eine Schrägverzahnung (2.1) auf, die mit einem Zahnrad (1) mit der Zähnezahl Z=1 in Eingriff steht. Aus der Aufsicht ist erkennbar, dass die Rotationsachse (1.1) des Zahnrades (1) senkrecht zur Längsachse (2.3) der Zahnstange (2) verläuft.

Das Zahnrad (1) mit der Zähnezahl Z=1 ist drehfest mit einem Schneckenrad (5) verbunden. Das Schneckenrad (5) steht mit einer Schnecke (6) in Eingriff, die drehfest mit der Antriebswelle (3) am Getriebeeingang verbunden ist. Bei der Antriebswelle (3) handelt es sich um die Motorwelle eines Antriebs (7), der als Elektromotor ausgeführt ist.

Ausgehend von dem Getriebeeingang ist die erste Getriebestufe eine Schneckengetriebestufe, die als treibendes Glied die Schnecke (6) und als getriebenes Glied das Schneckenrad (5) aufweist. Die zweite Getriebestufe ist die Stirnradgetriebestufe Z=1, die als treibendes Glied das außenverzahnte Zahnrad (1) mit der Zähnezahl Z=1 und als getriebenes Glied die schrägverzahnte Zahnstange (2) aufweist. Diese Getriebebauform ist besonders kompakt und lässt eine parallele Anordnung der Antriebswelle des Elektromotors zur Längsachse (2.3) der Zahnstange (2) zu.

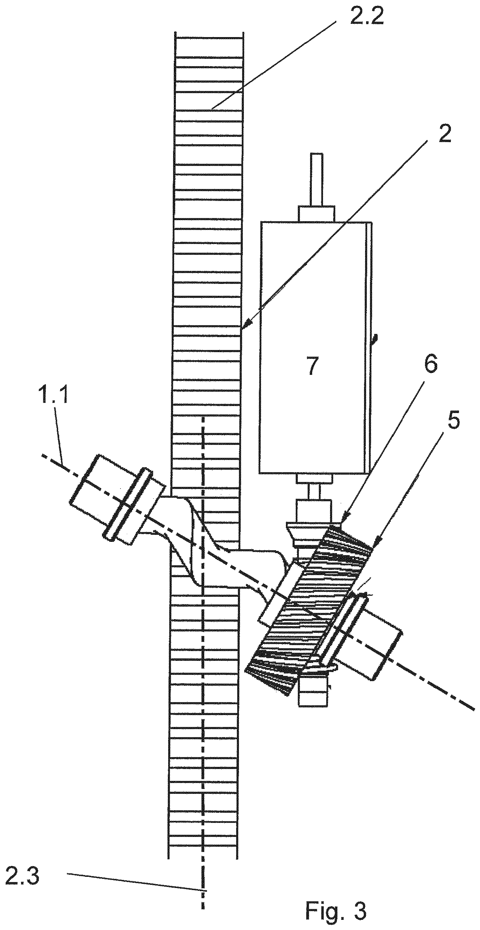

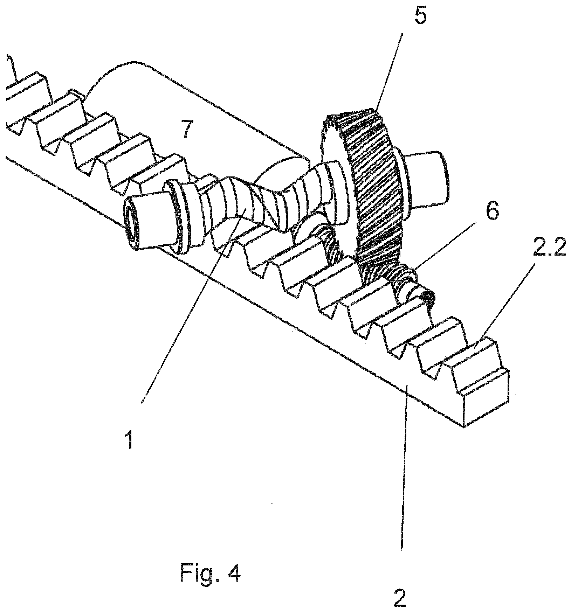

Figuren 3, 4 zeigen ebenfalls ein zweistufiges Zahnstangengetriebe. Im Aufbau stimmt das Zahnstangengetriebe nach Figuren 3, 4 weitgehend mit dem Zahnstangengetriebe nach Figur 2 überein. Ein wesentlicher Unterschied besteht jedoch darin, dass die Zahnstange (2) keine Schrägverzahnung (2.1), sondern eine Gradverzahnung (2.2) aufweist. Abweichend zu dem Ausführungsbeispiel nach Figur 2 verläuft die Rotationsachse (1.1) des Zahnrades (1) mit der Zähnezahl Z=1 unter einem spitzen Winkel zur Längsachse (2.3) der Zahnstange (2).

Die Antriebswelle (3) kann über eine elastische Kupplung an den Antrieb (7) gekoppelt sein. Die elastische Kupplung istals drehelastische Kupplung, beispielsweise als Schlauchkupplung aus einem elastischen Werkstoff, beispielsweise Gummi, ausgeführt. Die elastische Kupplung kann sowohl einen geringen Achsversatz zwischen der Antriebswelle (3) und Motorwelle des Antriebs (7) ausgleichen, als zwischen der ersten Getriebestufe und dem Antrieb (7) wirksame Momentenspitzen dämpfen.

Der besondere Vorteil der Erfindung besteht in den hohen realisierbaren Übersetzungsverhältnissen, den hohen mit der Zahnstange übertragbaren Kräften, der auf zwei reduzierten Anzahl der Getriebestufen und dem damit einhergehenden besonders geringen Bauraumvolumen.

| Nr. | Bezeichnung |
|---|---|
| 1. | Zahnrad |
| 1.1 | Rotationsachse |
| 2. | Zahnstange |
| 2.1 | Schrägverzahnung |
| 2.2 | Gradverzahnung |
| 2.3 | Längsachse |
| 4. | Linearbewegung |
| 5. | Schneckenrad |
| 6. | Schnecke |
| 7. | Antrieb |

## Patentansprüche

1. Mehrstufiges Zahnstangengetriebe, welches eine Rotationsbewegung einer Antriebswelle (3) an einem Getriebeeingang in eine Linearbewegung einer Zahnstange (2) an einem Getriebeausgang umwandelt, wobei
- das Zahnstangengetriebe mehrere Getriebestufen mit jeweils einem treibenden und einem getriebenen Getriebeglied aufweist,
- mindestens eine Getriebestufe, als treibendes und getriebenes Getriebeglied Räder aufweist,
- das Übersetzungsverhältnis jeder Getriebestufe, deren treibendes und getriebenes Getriebeglied als Räder ausgeführt sind, derart bestimmt wird, dass die Drehzahl des getriebenen Rades geringer als die Drehzahl des treibenden Rades ist,
**dadurch gekennzeichnet, dass** das Zahnstangengetriebe als zweistufiges Getriebe mit lediglich einer ersten und zweiten
Getriebestufe ausgeführt ist, wobei ausgehend von dem Getriebeeingang
- die erste Getriebestufe eine Schneckengetriebestufe ist, die als treibendes Getriebeglied eine Schnecke (6) und als getriebenes Getriebeglied ein Schneckenrad (5) aufweist, wobei das treibende Getriebeglied der Schneckengetriebestufe am Getriebeeingang angeordnet ist
- und die zweite Getriebestufe eine Stirnradgetriebestufe ist, die als treibendes Getriebeglied das Zahnrad (1) mit der maximalen Zähnezahl Z = 1 und als getriebenes Getriebeglied die Zahnstange (2) am Getriebeausgang aufweist.

2. Mehrstufiges Zahnstangengetriebe nach Anspruch 1, **dadurch gekennzeichnet, dass** die Antriebswelle (3) über eine elastische Kupplung (14) mit einem Antrieb (7) verbunden ist.

3. Mehrstufiges Zahnstangengetriebe nach Anspruch 1 oder 2, **dadurch gekennzeichnet, dass** die Zahnstange (2) eine Geradverzahnung (2.2) aufweist und die Rotationsachse (1.1) des Zahnrades (1) mit der maximalen Zähnezahl Z = 1 unter einem spitzen Winkel zur Längsachse (2.3) der Zahnstange (2) verläuft.

4. Mehrstufiges Zahnstangengetriebe nach Anspruch 1 oder 2, **dadurch gekennzeichnet, dass** die Zahnstange (2) eine Schrägverzahnung (2.1) aufweist und die Rotationsachse (1.1) des Zahnrades (1) mit der maximalen Zähnezahl Z = 1 unter einem rechten Winkel zur Längsachse (2.3) der Zahnstange (2) verläuft.

5. Mehrstufiges Zahnstangengetriebe nach einem der Ansprüche 1 bis 4, **dadurch gekennzeichnet, dass** das Gesamt-Übersetzungsverhältnis i des mehrstufigen Zahnstangengetriebes i ≥ 60:1 ist.

## Claims

1. A multi-stage rack and pinion gear, which converts a rotational movement of a drive shaft (3) at a gear input into a linear movement of a rack (2) at a gear output, wherein
- the rack and pinion gear comprises a plurality of gear stages, each with a driving and a driven gear member,
- at least one gear stage comprises wheels as a driving and driven gear member,
- the gear ratio of each gear stage, the driving and driven gears of which are designed as wheels, is determined in such a way that the speed of the driven wheel is lower than the speed of the driving wheel,
**characterized in that** the rack and pinion gear is designed as a double stage gear with only a first and second gear stage, wherein, starting from the gear input
- the first gear stage is a worm gear stage comprising a screw (6) as the driving gear member and a worm wheel (5) as the driven gear member, wherein the driving gear member of the worm gear stage is arranged at the gear input
- and the second gear stage is a spur gear stage which comprises the toothed gear (1) with the maximum number of teeth Z = 1 as the driving gear member and the rack (2) at the transmission output as the driven gear member.

2. The multi-stage rack and pinion gear according to Claim 1, **characterized in that** the drive shaft (3) is connected to a drive (7) via an elastic coupling (14).

3. The multi-stage gears according to Claim 1 or 2, **characterized in that** the rack (2) comprises a straight toothing (2.2) and the rotational axis (1.1) of the toothed gear (1) with the maximum number of teeth Z = 1 runs below an acute angle to the longitudinal axis (2.3) of the rack (2).

4. The multi-stage rack and pinion gear according to Claim 1 or 2, **characterized in that** the rack (2) comprises a helical toothing (2.1) and the rotational axis (1.1) of the toothed gear (1) with the maximum number of teeth Z = 1 runs below a right angle to the longitudinal axis (2.3) of the rack (2).

5. The multi-stage rack and pinion gear according to any one of the Claims 1 to 4, **characterized in that** the total transmission ratio i of the multi-stage rack and pinion gear is i ≥ 60: 1.

## Revendications

1. Transmission à crémaillère à plusieurs étages, laquelle transforme un mouvement en rotation d'un arbre d'entraînement (3) sur une entrée de transmission en un mouvement linéaire d'une crémaillère (2) sur une sortie de transmission,
- la transmission à crémaillère comportant plusieurs rapports de transmission, avec chaque fois un organe de transmission entraîneur et un autre entraîné,
- au moins un étage de transmission comportant des roues en tant qu'organe de transmission entraîneur et entraîné,
- le rapport de transmission de chaque étage de transmission, dont l'organe de transmission entraîneur et entraîné sont réalisés sous la forme de roues étant déterminé de telle sorte que la vitesse de rotation de la roue entraînée soit inférieure à celle de la roue entraîneuse,
**caractérisée en ce que** la transmission à crémaillère est réalisée sous la forme d'une transmission à deux étages, pourvue uniquement d'un premier et d'un deuxième étage de transmission, à partir de l'entrée de transmission
- le premier étage de transmission étant étage de transmission à vis sans fin, qui en tant qu'organe de transmission entraîneur, comporte une vis sans fin (6) et en tant qu'organe de transmission entraîné comporte une roue hélicoïdale (5), l'organe de transmission entraineur de l'étage de transmission à vis sans fin étant placé sur l'entrée de transmission
- et le deuxième étage de transmission étant un étage d'engrenage droit, qui en tant qu'organe de transmission entraîneur comporte la roue dentée (1) avec le nombre maximum de dents Z = 1 et en tant qu'organe de transmission entraîné comporte la crémaillère (2) à la sortie de transmission.

2. Transmission à crémaillère à plusieurs étages selon la revendication 1, **caractérisée en ce que** l'arbre d'entraînement (3) est relié par l'intermédiaire d'un accouplement (14) élastique avec un entraînement (7).

3. Transmission à crémaillère à plusieurs étages selon la revendication 1 ou 2, **caractérisée en ce que** la crémaillère (2) comporte une denture droite (2.2) et l'axe de rotation (1.1) de la roue dentée (1) avec le nombre maximum de dents Z = 1 s'écoule sous un angle aigu vers l'axe longitudinal (2.3) de la crémaillère (2) .

4. Transmission à crémaillère à plusieurs étages selon la revendication 1 ou 2, **caractérisée en ce que** la crémaillère (2) comporte une denture hélicoïdale (2.1) et l'axe de rotation (1.1) de la roue dentée (1) avec le nombre maximum de dents Z = 1 s'écoule sous un angle droit vers l'axe longitudinal (2.3) de la crémaillère (2).

5. Transmission à crémaillère à plusieurs étages selon l'une quelconque des revendications 1 à 4, **caractérisée** en ce le rapport de transmission total i de la transmission à crémaillère à plusieurs étages i est ≥ 60 : 1.
